# FASCICULE DE BREVET EUROPEEN

(11) **EP 1 699 294 B1**
(45) Date de publication et mention de la délivrance du brevet: **08.04.2009**
(21) Numéro de dépôt: 04816522.9
(22) Date de dépôt: 09.12.2004
(51) Int. Cl.: A22B 3/00

(54) **PROCEDE D'ETOURDISSEMENT DES PALMIPEDES PAR EXPOSITION AU PROTOXYDE D'AZOTE**
VERFAHREN ZUM BETÄUBEN VON SCHWIMMVÖGEL MITTELS DISTICKSTOFFOXID
METHOD OF STUNNING PALMIPEDS BY MEANS OF EXPOSURE TO NITROGEN PROTOXIDE

(30) Priorité: 10.12.2003 FR 0351019
(43) Date de publication de la demande: 13.09.2006
(73) Titulaire: INSTITUT NATIONAL DE LA RECHERCHE AGRONOMIQUE (INRA), 75341 Paris Cédéx 07 (FR)
(72) Inventeur: MONIN, Gabriel, F-63540 Romagnat (FR); SANTE-LHOUTELLIER, Véronique, F-63122 Ceyrat (FR)
(74) Mandataire: Catherine, Alain
(86) Numéro de dépôt international: PCT/FR2004/050668
(87) Numéro de publication internationale: WO 2005/058049

(56) Documents cités:
- EP-A- 0 434 278
- EP-A- 0 664 957
- WO-A-94/27425
- US-A- 5 643 072
- US-B1- 6 174 228
- RAJ A B M: "STUNNING OR KILLING METHODS: PROBLEMS AND PROSPECTS" POULTRY INTERNATIONAL, WATT PUBLISHING CO, MOUNT MORRIS. ILLINOIS, US, vol. 34, no. 7, 1 juillet 1995 (1995-07-01), page 14,16,18,20,, XP000652462 ISSN: 0032-5767

## Description

L'invention concerne le domaine du traitement des oiseaux destinés à la boucherie, et en particulier un procédé d'étourdissement des palmipèdes avant abattage, ainsi qu'un dispositif pour la mise en oeuvre du procédé.

Pour être rendus propres à la consommation humaine, les oiseaux doivent être vidés d'une bonne partie de leur sang, à l'exception du gibier qui se prépare d'une façon particulière. Or, un animal mort ne perd que très peu de sang. Les animaux sont donc tous saignés vivants et décèdent de la perte de leur sang. Comme il est cruel de trancher la gorge à un animal vivant, et d'attendre qu'il meure en se vidant de son sang, on pratique depuis longtemps l'étourdissement des animaux avant la saignée.

Deux grands types de méthodes d'étourdissement avant mise à mort sont utilisés pour la volaille: celles qui font appel à un choc électrique (électronarcose) et celles qui utilisent les atmosphères modifiées (étourdissement au gaz).

Les méthodes qui font appel à un choc électrique sont de deux types pour les oiseaux. On connaît d'abord l'électronarcose en banc électrifié qui consiste à faire passer un courant dans tout le corps de l'animal, et l'électronarcose dite "tête seulement" qui consiste à appliquer un courant seulement au niveau de la tête de l'animal. Les méthodes qui utilisent les atmosphères modifiées consistent, elles, soit à provoquer une hypoxie des animaux, soit à leur administrer un composé ayant des propriétés narcotiques, en combinaison avec de l'air.

L'étourdissement en atmosphère modifiée comporte plusieurs avantages par rapport à l'étourdissement électrique classique qui nécessite le recours à des agencements de courant, de tension et de fréquence, particuliers pour réussir à étourdir différentes espèces de volaille. Par exemple, en utilisant une atmosphère contrôlée pour étourdir les volailles, on réduit la fréquence de fractures, de meurtrissures, d'hémorragies, de pétéchies et d'hématomes dans le muscle, problème couramment associé à l'étourdissement électrique.

Un autre avantage de l'étourdissement en atmosphère contrôlée est qu'il élimine le besoin de sortir les volailles conscientes, des cages et de les restreindre à l'aide d'étriers, ce qui permet d'atténuer le stress et la souffrance que subissent les oiseaux. Cette méthode est rapide, sans douleur et efficace. L'étourdissement de la volaille en atmosphère contrôlée permet aussi de produire une chair de poitrine plus blanche qu'en ayant recours à l'étourdissement électrique. De manière plus générale, l'environnement du personnel travaillant dans l'aire d'étourdissement est de meilleure qualité lorsqu'on a recours à l'atmosphère contrôlée. En effet, les animaux sont manipulés inertes et de ce fait, la poussière est relativement peu abondante puisque les oiseaux sont inconscients lorsqu'ils sont placés sur la chaîne d'éviscération.

Le recours à la méthode d'étourdissement en atmosphère contrôlée pour les opérations de traitement des volailles favorise la mise au point de systèmes de suspension automatique des oiseaux sur la chaîne d'éviscération, car les oiseaux sont déjà inconscients lorsqu'ils sont placés dans les étriers. Il s'agit d'un gros avantage pour les exploitants d'établissements de transformation de la volaille.

Pour ces raisons, on assiste depuis quelques années à un intérêt grandissant des industriels pour l'étourdissement en atmosphère contrôlée. Choque fois que cela est possible, le recours aux atmosphères contrôlées supplante l'électronarcose. C'est le cas par exemple pour la dinde et le poulet pour lesquels des méthodes efficaces reposant sur l'utilisation de CO₂ et/ou de mélange CO₂/O₂ sont proposées.

Cependant, l'étourdissement des palmipèdes et en particulier, des canards, pose un problème. En effet, les palmipèdes peuvent se mettre en apnée pendant plusieurs minutes en présence des fortes concentrations de CO₂ nécessaires pour provoquer la perte de conscience des animaux. On a rapporté des apnées d'une durée très variable mais pouvant atteindre quinze minutes, car ces animaux sont des animaux plongeurs en conditions naturelles. Cette réaction est extrêmement variable entre individus, et des délais de 1,5 à 6 minutes ont été observés par les inventeurs pour obtenir la perte de conscience apparente de tous les animaux d'un même lot. Cette variabilité est incompatible avec un procédé industriel. En effet, si l'on souhaite obtenir l'inconscience de tous les animaux avant saignée, ce qui est réglementairement obligatoire, la plupart des animaux seront morts avant la saignée, entraînant une perte de qualité des produits. On peut citer, à titre d'exemple de perte de qualité, des problèmes de veines engorgées.

L'anesthésie gazeuse de canards non gavés a déjà été étudiée par une équipe britannique utilisant un mélange CO₂/argon pour tuer les animaux (RAJ et al., 1998 British Poultry Sciences 39 pages 404 à 407). On peut citer, également à titre d'exemple, la demande de brevet EP-0434278 décrivant une méthode pour tuer les volailles, utilisant un mélange CO₂/argon. Néanmoins, deux inconvénients majeurs ressortent des méthodes décrites dans ces documents, qui sont le prix très élevé de l'argon et la mort des animaux, qui entraîne une perte de qualité des produits comme cela a été décrit ci-dessus.

Pour remédier aux inconvénients liés à la mise en apnée des palmipèdes, et éviter cependant la mort des animaux traités, les inventeurs ont mis au point un nouveau procédé d'étourdissement des palmipèdes.

L'invention concerne un procédé d'étourdissement des palmipèdes, comprenant :
(i) une étape (a) au cours de laquelle les palmipèdes sont exposés à une atmosphère comprenant une quantité de protoxyde d'azote comprise entre 40 et 90% en volume, suivie d'une étape (b) au cours de laquelle les palmipèdes sont exposés à une atmosphère modifiée apte à provoquer leur étourdissement ; ou
(ii) une étape unique (c) au cours de laquelle les palmipèdes sont exposés à une atmosphère comprenant un mélange protoxyde d'azote/dioxyde de carbone dans un rapport de 40/60 à 60/40 en volume.

Les inventeurs ont en effet découvert qu'il est possible de surmonter les problèmes de mises en apnée des palmipèdes en provoquant une réduction de la perception de l'environnement par les animaux grâce à l'utilisation du protoxyde d'azote (N₂O).

Les concentrations en dioxyde de carbone (CO₂) dans l'air sont très faibles, c'est-à-dire de l'ordre de 0,033%. L'action anesthésiante du CO₂ est notable à partir de concentrations de l'ordre de 25 à 30% (essai réalisé sur des poulets et des dindes). De plus, le dioxyde de carbone est un gaz irritant pour les muqueuses. Sans vouloir être lié à une théorie particulière, les inventeurs pensent que, dans la mesure où le dioxyde de carbone est un gaz irritant pour les muqueuses, les canards qui détectent des concentrations élevées en CO₂ s'arrêtent de respirer normalement et se placent en apnée. Etant donné que les palmipèdes sont des animaux plongeurs, leur capacité d'apnée est importante (jusqu'à plusieurs minutes).

De manière surprenante, on a montré selon l'invention que le réflexe d'apnée des palmipèdes en présence de C O₂ est évité lorsque les animaux sont placés dans un environnement, par exemple une enceinte fermée, contenant du protoxyde d'azote.

On a ainsi montré que le protoxyde d'azote stimule la fréquence respiratoire des palmipèdes, ce qui permet de diminuer la durée du procédé d'étourdissement par rapport aux durées des procédés connus.

Le procédé d'étourdissement décrit convient à tous les palmipèdes, et en particulier, les palmipèdes soumis au procédé selon l'invention sont des palmipèdes non gavés ou des palmipèdes gavés.

Le recours à l'utilisation du protoxyde d'azote comprend des avantages supplémentaires parmi lesquels on peut citer l'innocuité du protoxyde d'azote pour le consommateur, ce gaz étant autorisé pour le conditionnement des produits alimentaires.

De plus, les densités du protoxyde d'azote et du CO₂ sont les mêmes (poids moléculaire = 44). En conséquence, les installations préexistantes, prévues pour les méthodes d'étourdissement au C0₂ peuvent être utilisées avec le procédé selon l'invention.

Le protoxyde d'azote est également beaucoup moins dangereux pour les opérateurs que le dioxyde de carbone. En effet, en anesthésie humaine, on l'administre à des concentrations de 50%, alors que le dioxyde de carbone est considéré comme très dangereux à partir de 3%. Le principal inconvénient du protoxyde d'azote est son prix plus élevé que celui du dioxyde de carbone, et comme ce dernier, c'est un gaz à effet de serre. Néanmoins, concernant ce dernier point, il s'agit d'un inconvénient peu important puisque les quantités éventuellement utilisées pour l'anesthésie des canards maigres, soit quelques grammes par animal, sont négligeables relativement à celles libérés par l'ensemble des autres activités industrielles.

Au cours de l'étape (b), les palmipèdes sont exposés à une « atmosphère modifiée » apte à provoquer leur étourdissement. Par cette expression, l'homme du métier comprendra une atmosphère dans laquelle la composition en gaz est modifiée par rapport à la composition de l'air présent dans l'atmosphère soit par enrichissement en un gaz de l'air comme l'oxygène moléculaire (O₂) ou l'azote moléculaire (N₂) soit avec de l'argon (Ar).

Alternativement, l'atmosphère modifiée « apte à provoquer l'étourdissement » à laquelle sont soumis les palmipèdes à l'étape (b) comprend une quantité anesthésiante de dioxyde de carbone. Une quantité anesthésiante de dioxyde de carbone, est une quantité de dioxyde de carbone suffisante pour induire une hypoxie hypercapnique du palmipède.

Des expériences sur des canards, ont montré que ceux-ci peuvent être étourdis en utilisant une large fourchette de concentration en dioxyde de carbone. Par exemple 60 à 80% de CO₂ en volume, dans l'air. Ainsi, de préférence, l'atmosphère modifiée à laquelle sont soumis les palmipèdes à l'étape (b) est un mélange air/dioxyde de carbone dans un rapport de 40/60 à 20/80 en volume.

De préférence, l'étape (a) a une durée comprise entre 1 et 2 minutes, l'étape (b) a une durée comprise entre 1,5 et 3 minutes, et l'étape (c) a une durée comprise entre 2 et 3 minutes.

Les palmipèdes sont préférentiellement choisis parmi les espèces de canards suivantes : *Anas platyrhynchos, Anas platyrhynchos laysanensis, Anas bahamensis, Aix sponsa, Aix galericulata et Cairina mostacha.*

L'invention concerne également un dispositif d'étourdissement des palmipèdes comprenant une enceinte possédant une ouverture par laquelle des caisses à claire-voie dans lesquelles sont placés des palmipèdes peuvent être introduites et retirées, et des moyens d'enrichissement de l'atmosphère de l'enceinte en protoxyde d'azote.

Certains avantages apparaîtront plus clairement à la lumière de l'exemple 1 suivant.

### EXEMPLE 1

### 1. Matériel et méthode:

Les essais ont porté sur deux lots de canards mulards. Au total 70 anesthésies gazeuses ont été conduites.

### 2. Etourdissement gazeux des canards au protoxyde d'azote:

Deux caissons transparents étanches ont été utilisés. L'introduction du gaz s'effectue par le bas avec débit suffisant pour maintenir la concentration en gaz voulue sans pour autant être en surpression. L'exposition au gaz est réalisée ainsi:
les canards sont exposés pendant 1 à 2 minutes à un mélange air/protoxyde d'azote à des concentrations variant dans des rapports de 40/60 à 10/90, puis à un mélange air/CO₂ pendant deux à trois minutes aux concentrations variant dans des rapports de 40/60 à 20/80.

Les mêmes canards sont placés dans une atmosphère très riche en CO₂ (60 à 90%). Ces conditions représentent les conditions témoins de l'anesthésie gazeuse.

Tous les canards ont donc été traités au moins une fois par la méthode selon l'invention et la méthode monophasique au dioxyde de carbone.

### 3. Observations comportementales:

L'efficacité de l'étourdissement s'évalue d'une part par la perte d'équilibre de l'animal, c'est-à-dire lorsque le canard vacille et d'autre part, par la perte de posture verticale, c'est-à-dire lorsque le canard se couche. Ce comportement correspond à une diminution inconsciente des aptitudes physiques et mentales. Les critères suivants ont été retenus:
- le temps au bout duquel les premiers signes de l'étourdissement apparaissent,
- l'état des canards,
- l'agitation,
- les convulsions,
- la respiration régulière ou non,
- la tension du cou-relâchement,
- l'état du canard : vivant, étourdi ou mort (mesure au stéthoscope de l'activité cardiaque).

La récupération après anesthésie se mesure par l'aptitude du canard à redresser le cou et ensuite à se mettre sur ses pattes.

### 4. Résultats:

La durée de la première phase au protoxyde d'azote peut être comprise entre 1 minute et 1 minute 30. Si la durée de la première phase au protoxyde d'azote est de 1 minute, la durée de la deuxième phase au dioxyde de carbone doit être supérieure à 1 minute 30 pour garantir un étourdissement efficace de tous les canards.

Si la durée de la première phase au protoxyde est de 1 minute 30, la durée de la deuxième phase au dioxyde de carbone doit être de 2 minutes 30. L'étourdissement est efficace et les canards montrent les premiers signes de réveil après 20 secondes à 30 secondes, ce qui correspond au temps nécessaire pour mener à bien l'étape de saignée des canards.

Les mêmes canards ont été placés en présence de dioxyde de carbone. Le comportement varie entre les canards et tous les cas de figure sont présents :
(i) des canards morts après 40 secondes dans le dioxyde de carbone,
(ii) des canards étourdis après 1 à 2 minutes, et
(iii) des canards conscients après 4, 5 et même 5 minutes 35 secondes.

Les canards sont couchés et redressent leur tête après un temps de récupération pour l'animal étourdi variant de 2 secondes à 20 secondes. Cette dernière expérience reflète bien la difficulté pour un processus industriel qui utiliserait le CO₂ uniquement, d'appliquer un temps d'inhalation suffisant pour garantir un étourdissement effectif de tous les canards mais aussi pour pouvoir procéder à l'étape de saignée dont l'efficacité dépend du temps qui la sépare de la mort de l'animal. Cet exemple permet donc d'apprécier l'intérêt du procédé selon l'invention.

## Revendications

1. Procédé d'étourdissement des palmipèdes, **caractérisé en ce qu'**il comprend :
(i) une étape (a) au cours de laquelle les palmipèdes sont exposés à une atmosphère comprenant une quantité de protoxyde d'azote comprise entre 40 et 90% en volume, suivie d'une étape (b) au cours de laquelle les palmipèdes sont exposés à une atmosphère modifiée apte à provoquer leur étourdissement ; ou
(ii) une étape unique (c) au cours de laquelle les palmipèdes sont exposés à une atmosphère comprenant un mélange protoxyde d'azote/dioxyde de carbone dans un rapport de 40/60 à 60/40 en volume.

2. Procédé selon la revendication 1, **caractérisé en ce que** les palmipèdes sont des palmipèdes non gavés.

3. Procédé selon la revendication 1**, caractérisé en ce que** les palmipèdes sont des palmipèdes gavés.

4. Procédé selon l'une quelconque des revendications 1 à 3, **caractérisé en ce que** l'atmosphère modifiée à laquelle sont soumis les palmipèdes à l'étape (b) comprend une quantité anesthésiante de dioxyde de carbone.

5. Procédé selon l'une quelconque des revendications 1 à 4, **caractérisé en ce que** l'atmosphère modifiée à laquelle sont soumis les palmipèdes à l'étape (b) est un mélange air/dioxyde de carbone dans un rapport de 40/60 à 20/80 en volume.

6. Procédé selon l'une quelconque des revendications 1 à 5, **caractérisé en ce que** l'étape (a) a une durée comprise entre 1 et 2 minutes, et l'étape (b) a une durée comprise entre 1,5 et 3 minutes.

7. Procédé selon l'une quelconque des revendications 1 à 6, **caractérisé en ce que** l'étape (c) a une durée comprise entre 2 et 3 minutes.

8. Procédé selon l'une quelconque des revendications 1 à 7, **caractérisé en ce que** les palmipèdes sont choisis parmi les espèces de canards suivantes : *Anas platyrhynchos, Anas platyrhynchos laysanensis, Anas bahamensis, Alx sponsa, Aix galericulata et Calrina mostacha*.

## Claims

1. A method for stunning palmipeds, **characterized in that** it comprises:
(i) a step (a), wherein the palmipeds are exposed to an atmosphere comprising nitrogen protoxide in an amount ranging from 40 to 90% by volume, followed with a step (b), wherein the palmipeds are exposed to a modified atmosphere suitable for inducing their stunning; or
(ii) a single step (c), wherein the palmipeds are exposed to an atmosphere comprising a combination of nitrogen protoxide and carbon dioxide in a ratio ranging from 40:60 to 60:40 by volume.

2. A method according to claim 1, wherein the palmipeds are non-crammed palmipeds.

3. A method according to claim 1, wherein the palmipeds are crammed palmipeds.

4. A method according to any one of claims 1 to 3, wherein the modified atmosphere to which the palmipeds are submitted in step (b) comprises an anaesthetizing amount of carbon dioxide.

5. A method according to any one of claims 1 to 4, wherein the modified atmosphere to which the palmipeds are submitted in step (b) is a combination composed of air and carbon dioxide in a ratio ranging from 40:60 to 20:80 by volume.

6. A method according to any one of claims 1 to 5, wherein step (a) does last from I to 2 minutes, and step (b) does last from 1.5 to 3 minutes.

7. A method according to any one of claims 1 to 6, wherein the step (c) does last from 2 to 3 minutes.

8. A method according to any one of claims 1 to 7, wherein the palmipeds are selected from following duck species: *Anas platyrhynchos, Anas platyrhynchos laysanensis, Anas bahamensis, Aix sponsa, Aix galericulata* and *Cairina mostacha*.

## Patentansprüche

1. Verfahren zur Betäubung von Schwimmvögeln, **dadurch gekennzeichnet, dass** es Folgendes umfasst:
(i) einen Schritt (a), bei dem die Schwimmvögel einer Atmosphäre ausgesetzt werden, die eine Menge Distickstoffmonoxid zwischen 40 und 90 Vol.-% umfasst, gefolgt von einem Schritt (b), bei dem die Schwimmvögel einer modifizierten Atmosphäre ausgesetzt werden, die ihre Betäubung hervorrufen kann; oder
(ii) einen einzigen Schritt (c), bei dem die Schwimmvögel einer Atmosphäre ausgesetzt werden, die ein Gemisch von Distickstoffmonoxid und Kohlendioxid in einem Volumenverhältnis von 40/60 bis 60/40 umfasst.

2. Verfahren gemäß Anspruch 1, **dadurch gekennzeichnet, dass** die Schwimmvögel keine gestopften Schwimmvögel sind.

3. Verfahren gemäß Anspruch 1, **dadurch gekennzeichnet, dass** die Schwimmvögel gestopfte Schwimmvögel sind.

4. Verfahren gemäß einem der Ansprüche 1 bis 3, **dadurch gekennzeichnet, dass** die modifizierte Atmosphäre, der die Schwimmvögel in Schritt (b) ausgesetzt werden, eine anästhetisierende Menge Kohlendioxid umfasst.

5. Verfahren gemäß einem der Ansprüche 1 bis 4, **dadurch gekennzeichnet, dass** die modifizierte Atmosphäre, der die Schwimmvögel in Schritt (b) ausgesetzt werden, ein Gemisch von Luft und Kohlendioxid in einem Volumenverhältnis von 40/60 bis 20/80 ist.

6. Verfahren gemäß einem der Ansprüche 1 bis 5, **dadurch gekennzeichnet, dass** Schritt (a) eine Dauer zwischen 1 und 2 Minuten hat und Schritt (b) eine Dauer zwischen 1,5 und 3 Minuten hat.

7. Verfahren gemäß einem der Ansprüche 1 bis 6, **dadurch gekennzeichnet, dass** Schritt (c) eine Dauer zwischen 2 und 3 Minuten hat.

8. Verfahren gemäß einem der Ansprüche 1 bis 7, **dadurch gekennzeichnet, dass** die Schwimmvögel aus den folgenden Entenarten ausgewählt sind: *Anas platyrhynchos, Anas platyrhynchos laysanensis, Anas bahamensis, Aix sponsa, Aix galericulata* und *Cairina moschata*.
